# FASCICULE DE BREVET EUROPEEN

(11) **EP 0 439 391 B1**
(45) Date de publication et mention de la délivrance du brevet: **10.08.1994**
(21) Numéro de dépôt: 91400115.1
(22) Date de dépôt: 18.01.1991
(51) Int. Cl.: C01B 25/14

(54) **Procédé continu de préparation de polysulfures de tétraphosphore**
Kontinuierliches Verfahren zur Herstellung von Tetraphosphorpolysulfiden
Continuous method for preparation of tetraphosphorous polysulphides

(30) Priorité: 24.01.1990 FR 9000789
(43) Date de publication de la demande: 31.07.1991
(73) Titulaire: ELF ATOCHEM S.A., 92800 Puteaux (FR)
(72) Inventeur: Engel, Philippe, F-69100 Villeurbanne (FR); Courant, Alain, F-38200 Vienne (FR)

(56) Documents cités:
- US-A- 2 794 705

## Description

La présente invention concerne un procédé continu de préparation en phase liquide de polysulfures de tétraphosphore et en particulier de P₄S₁₀.

L'invention concerne également un dispositif pour la mise en oeuvre du présent procédé.

On sait que la préparation du P₄S₁₀ à partir du soufre liquide et du phosphore liquide entre 250°C et 515°C est une réaction fortement exothermique.

Le brevet US-A- 2 794 705 enseigne que l'on peut réaliser cette réaction dans un réacteur non agité par introduction du phosphore et du soufre liquides dans un pied de cuve de P₄S₁₀ maintenu en fusion (515°C). Les calories dégagées par la réaction sont utilisées pour vaporiser le P₄S₁₀ formé.

Cette façon d'opérer présente un certain nombre d'inconvénients. Du fait de la haute viscosité du milieu, - le P₄S₁₀ présente un domaine de viscosités élevées au-dessus de son point de fusion - on observe une mauvaise répartition des calories dégagées entraînant des retards à l'ébullition et des surchauffes du produit, lesdites surchauffes se manifestant par des forts à-coups susceptibles d'endommager le réacteur et les appareillages y attenant ou de dégrader le produit.

On a maintenant trouvé un procédé de préparation de polysulfures de tétraphosphore de formule P₄Sₓ, x étant au moins égal à 3, par réaction de phosphore et de soufre, ce procédé consistant à alimenter en continu un milieu réactionnel en circulation avec du phosphore et du soufre liquides en proportions correspondant au(x) polysulfure(s) désiré(s), à contrôler la température du milieu réactionnel, à séparer dudit milieu réactionnel le ou les polysulfures de tétraphosphore à l'état gazeux, ledit procédé étant caractérisé en ce que la circulation du milieu réactionnel est réalisée dans un réacteur boucle, ladite circulation étant provoquée essentiellement par les différences de densités régnant dans ledit milieu réactionnel.

La différence des densités du milieu réactionnel résulte de la vaporisation progressive des polysulfures de tétraphosphore dans une partie du réacteur ce qui permet la mise en mouvement du fluide.

Cette vaporisation, permise par l'exothermicité de la réaction, s'effectue dans une zone du réacteur proche de l'alimentation en réactifs de sorte qu'il se produit dans cette zone un abaissement de la densité du milieu réactionnel résultant de la vaporisation des produits formés et de la température élevée.

Ceci provoque un mouvement de circulation du milieu réactionnel par effet thermosiphon, homogénéisant l'ensemble réactionnel.

Bien que la chaleur dégagée par la réaction soit suffisante pour provoquer cet effet de thermosiphon, on peut avantageusement chauffer l'une quelconque des parties du réacteur et préférentiellement la partie où s'effectue la réaction proprement dite, c'est-à-dire la zone d'alimentation en réactifs.

Selon une variante du procédé, la circulation du milieu réactionnel entretenue par les différences de densité peut complémentairement être initiée et entretenue au moyen d'une pompe de circulation placée à un endroit quelconque du réacteur mais de préférence à un endroit proche de l'alimentation en réactifs.

Ce procédé s'applique à la préparation de polysulfures de tétraphosphore de formule P₄Sₓ dans laquelle x est au moins égal à 3. Il s'applique tout particulièrement à la fabrication du décalsulfure de tétraphosphore P₄S₁₀.

La vitesse de circulation du milieu réactionnel, phase de départ exclue est au moins égale à 0,01 m/s et de préférence comprise entre 0,01 m/s et 1m/s.

Généralement la température moyenne du milieu réactionnel, variable avec la pression, est au moins égale à 300°C et elle est de préférence comprise entre 300°C et 600°C.

La réaction est généralement réalisée sous gaz inerte et sous une pression absolue au moins égale à 0,1 bar et généralement comprise entre 0,1 bar et 10 bars, cette pression étant de préférence comprise entre 1 bar et 2 bars.

Le phosphore et le soufre sont généralement introduits dans le milieu réactionnel à une température supérieure à leur point de fusion et inférieur à leur point d'ébullition. Avantageusement on introduit le phosphore à une température comprise entre 60°C et 100°C et le soufre à une température comprise entre 120°C et 150°C.

Le réacteur peut être avantageusement chargé au départ avec une quantité de polysulfure de tétraphosphore que l'on porte à une température supérieure à son point de fusion et inférieur à son point d'ébullition et dans laquelle on introduit avantageusement le phosphore et le soufre.

S'agissant de la fabrication du P₄S₁₀, il est avantageux de porter la température du décasulfure de tétraphosphore chargé entre 350°C et 550°C et de préférence voisine de 400°C.

Le phosphore et le soufre sont introduits en quantités sensiblement stoéchiométriques de façon à former le produit désiré.

S'agissant de la fabrication du P₄S₁₀ on utilisera avantageusement un rapport P/S égal à 4 : 10 . Un excès de l'un ou l'autre des réactifs peut entraîner la formation de produits secondaires et un abaissement significatif du rendement.

Le phosphore utilisé est avantageusement du phosphore blanc qui peut avoir été préalablement purifié.

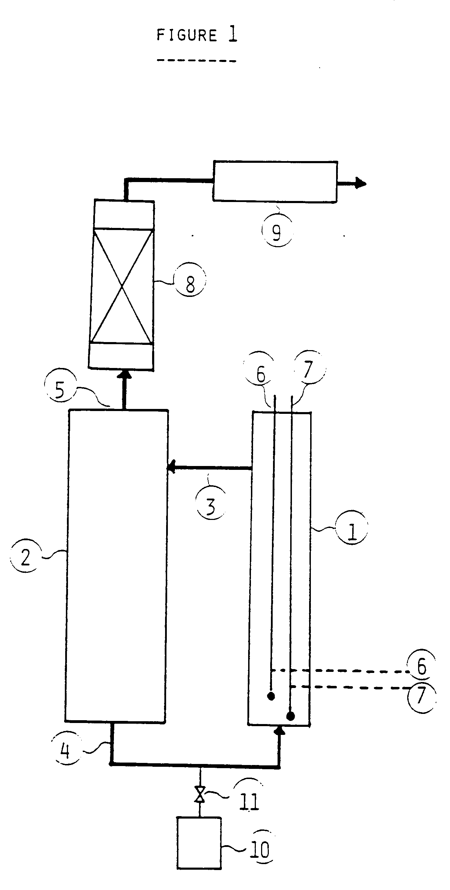

Ce procédé peut être mis en oeuvre au moyen d'un dispositif tel que représenté schématiquement sur la figure 1.

Ce dispositif est caractérisé en ce qu'il comprend une partie (1) - dénommée jambe réactionnelle - généralement cylindrique et sensiblement verticale, une partie (2) généralement cylindrique et sensiblement parallèle à la jambe réactionnelle, ces deux parties étant reliées généralement à leurs parties inférieure et supérieure par des tubes (3) et (4) de section sensiblement égale à la section de la jambe réactionnelle, au moins une alimentation en phosphore liquide (6) et au moins une alimentation en soufre liquide (7) permettant d'introduire le phosphore et le soufre liquides dans la moitié inférieure de la jambe réactionnelle, une évacuation (5) du (ou des) polysulfure(s) de tétraphosphore sous forme gazeuse située au voisinage de l'une quelconque des extrémités supérieures des parties (1) et (2).

La partie (2) a généralement un diamètre au moins égal au diamètre de la jambe réactionnelle (1). Le rapport du diamètre de la partie (2) au diamètre de la jambe réactionnelle peut aller de 1 à 5 et est de préférence compris entre 2 et 3.

Le dispositif utilisé pour la mise en oeuvre du procédé selon l'invention comprend à la partie supérieure et avantageusement au sommet de la partie (2) une évacuation (5) des produits sous forme gazeuse.

Ces produits pouvant ensuite traverser une colonne garnie (8) permettant de retenir les impuretés susceptibles de provenir des réactifs ainsi que les sous-produits susceptibles de se former lors de la réaction.

Ces impuretés et sous-produits peuvent être recueillis dans un pot (10) par l'intermédiaire d'une vanne (11) située généralement à la partie inférieure de l'une quelconque des parties (1), (2) et (4) qui permet d'effectuer des purges discontinues.

Les produits sortant de la colonne (8) sont condensés dans l'échangeur tubulaire (9) et sortent sous forme liquide. Après refroidissement, ils peuvent subir les traitements habituels (écaillage, broyage, conditionnement).

Le soufre liquide et le phosphore liquide peuvent être avantageusement introduits dans le milieu réactionnel à un ou plusieurs endroits situés essentiellement dans le tiers inférieur de la jambe réactionnelle. Ils peuvent être introduits au même endroit mais il peut être avantageux d'amener le soufre à un niveau différent du niveau de l'alimentation en phosphore.

Le soufre et le phosphore peuvent être introduits à la partie supérieure de la jambe réactionnelle par des tubes plongeurs comme indiqué sur la figure 1 (liaison des repères 6 et 7 en traits pleins).

On peut également introduire le phosphore et le soufre dans la jambe réactionnelle à d'autres endroits par exemple directement dans la partie inférieure de cette jambe (liaison des repères 6 et 7 en pointillés).

On peut également introduire par des tubes plongeurs ou par ces mêmes tubes un léger débit de gaz inerte tel que l'azote.

Les caractéristiques de la jambe réactionnelle sont liées essentiellement à la vitesse de circulation du milieu réactionnel et par conséquent aux caractéristiques physico-chimiques du polysulfure de tétraphosphore fabriqué. S'agissant du P₄S₁₀ il est connu qu'au dessus de son point de fusion ce produit comporte des domaines de viscosités élevées, ce qui nécessite une bonne agitation pour répartir les calories dégagées par la réaction et par conséquent une vitesse de circulation élevée pour répartir uniformément ces calories et favoriser l'évaporation du produit formé.

A cette fin, on choisira une longueur de la jambe réactionnelle de façon à obtenir un temps de séjour relativement court. Avantageusement on choisira une jambe réactionnelle dont le rapport hauteur sur diamètre soit compris entre 2 et 20 inclus et de préférence entre 5 et 10

La hauteur peut varier de 0,5 mètre à 5 mètres mais de préférence on choisira une hauteur comprise entre 1,5 mètres et 3 mètres.

Les parties (1), (2) et (4) peuvent être munis de systèmes de chauffage (non représentés sur la figure 1) qui peuvent fonctionner conjointement ou séparément.

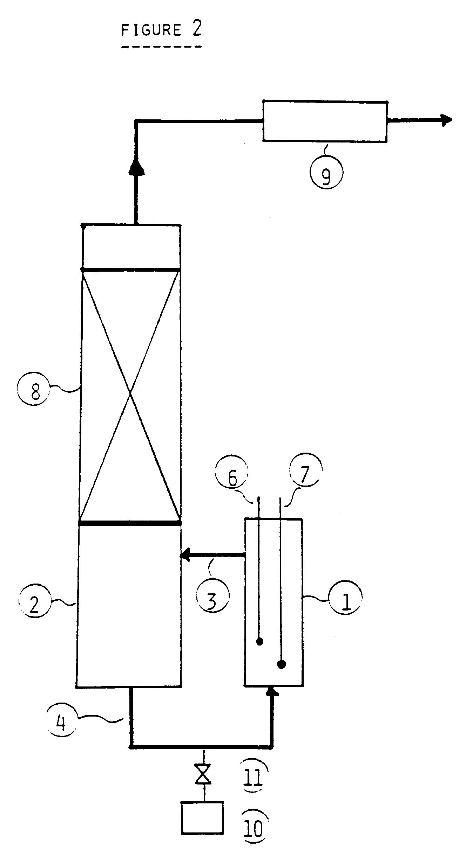

Ce procédé conforme à l'invention peut également être mis en oeuvre au moyen d'un dispositif particulier tel que représenté schématiquement sur la figure 2. Dans ce dispositif, la partie (8) est directement superposée à la partie (2), l'évacuation (5) est supprimée et les produits gazeux formés traversent directement la colonne (8).

Ce procédé conforme à l'invention présente une grande flexibilité. On peut faire varier largement la vitesse de circulation du milieu réactionnel ce qui entraîne une excellente répartition des calories au sein du milieu réactionnel et évite des surchauffes ou des retards à l'ébullition des produits formés.

Cette circulation importante dans la boucle permet de réduire également le taux d'évaporation des réactifs dans le système et par conséquent de respecter la stoechiométrie de la réaction.

Ce procédé ne nécessite l'utilisation d'aucun agitateur, ce qui permet d'éliminer les risques de fuites des réactifs et des produits vers l'extérieur : ceci présente un avantage important sur les plans de la sécurité et de l'environnement.

### L'exemple suivant illustre l'invention.

a - L'appareillage utilisé est tel que représenté sur la figure 1, avec les caractéristiques suivantes :
   - dimensions de la jambe réactionnelle (1)
      . hauteur 2 m
      . diamètre intérieur 0,300 m
   - diamètre intérieur de la partie (2) : 0,8 m
   - entrée des réactifs (6) et (7) à la partie supérieure de la jambe réactionnelle, avec injection dans le tiers inférieur de la jambe (1)
   - sortie du P₄S₁₀ gazeux en (5) à 520°C
   - condensation de P₄S₁₀ dans (9) qui est refroidi par un circuit d'azote sous pression (4 bars, 320°C). P₄S₁₀ sort à 335°C du condenseur.
   - chauffage des parties (1) et (2)
      . puissance de chauffage :
         - (1): 20 Kw
         - (2): 5 Kw
b - Conditions opératoires
   Dans le dispositif tel que décrit on introduit 600 kg de P₄S₁₀ que l'on porte progressivement à 400°C.

A cette température on alimente en continu du soufre et du phosphore.

Le soufre est introduit à une température de 140°C à un débit de 720 kg/h.

Le phosphore est introduit à une température de 60°C à un débit de 280 kg/h.

On introduit également en même temps que le phosphore et le soufre, par les tubes plongeurs un léger débit d'azote.

La température de la jambe réactionnelle s'élève progressivement et se stabilise à 520°C. A ce stade le fluide est en mouvement et a une vitesse de circulation de 0,3 m/s.

Le réacteur fonctionne ainsi pendant 60 heures et fournit du P₄S₁₀ à un débit de 1000 kg/h.

La pression mesurée au sommet de (2) est voisine de 1 bar absolu.

Le P₄S₁₀ obtenu présente les caractéristiques suivantes :
- P % en poids : 27,8 - 28,5
- S % en poids : 71,5 - 72,2
- Fe % en poids : ≦ 0,05
- Fusion : 278°C - 280°C

## Revendications

1. Procédé continu de préparation de polysulfures de tétraphosphore de formule P₄Sₓ dans laquelle x est au moins égal à 3 par réaction du phosphore et du soufre, ledit procédé consistant à alimenter en continu le milieu réactionnel en circulation avec du phosphore et du soufre liquides en proportion correspondants au(x) polysulfure(s) désiré(s), à contrôler la température du milieu réactionnel, à séparer dudit milieu réactionnel le ou les polysulfures de tétraphosphore à l'état gazeux, ledit procédé étant caractérisé en ce que la réaction est réalisée dans un réacteur boucle, ladite circulation étant provoquée essentiellement par les différences de densités régnant dans ledit milieu réactionnel.

2. Procédé selon la revendication 1, caractérisé en ce que la température moyenne du milieu réactionnel est au moins égale à 300°C.

3. Procédé selon l'une quelconque des revendications 1 et 2, caractérisé en ce que la température moyenne du milieu réactionnel est comprise entre 300°C et 600°C.

4. Procédé selon la revendication 1, caractérisé en ce que la vitesse de circulation du milieu réactionnel est au moins égale à 0,01 m/s.

5. Procédé selon l'une quelconque des revendications 1 et 4, caractérisé en ce que la vitesse de circulation du milieu réactionnel est compris entre 0,01 m/s et 1 m/s.

6. Procédé selon la revendication 1 caractérisé en ce que la réaction est effectuée sous une pression absolue au moins égale à 0,1 bar.

7. Procédé selon l'une quelconque des revendications 1 et 6, caractérisé en ce que la réaction est effectuée sous une pression absolue comprise entre 0,1 bar et 10 bars.

8. Procédé selon l'une quelconque des revendications 1, 6 et 7, caractérisé en ce que la réaction est effectuée sous une pression absolue comprise entre 1 bar et 2 bars.

9. Procédé selon l'une quelconque des revendications 1 à 8, caractérisé en ce que le phosphore et le soufre liquides sont introduits dans un pied de cuve de polysulfure de tétraphosphore liquide.

10. Procédé selon l'une quelconque des revendications 1 à 9, caractérisé en ce que le polysulfure de tétraphosphore est le décasulfure de tétraphosphore P₄S₁₀.

11. Dispositif permettant la mise en oeuvre du procédé selon l'une quelconque des revendications 1 à 10, ledit dispositif étant caractérisé en ce qu'il comprend une partie (1) - dénommée jambe réactionnelle -, généralement cylindrique et sensiblement verticale, une partie (2) généralement cylindrique et sensiblement parallèle à la jambe réactionnelle, ces deux parties étant reliées généralement à leur partie inférieure et supérieure par des tubes (3) et (4) de section sensiblement égale à la section de la jambe réactionnelle, au moins une alimentation en phosphore liquide (6) et au moins une alimentation en soufre liquide (7) permettant d'introduire le phosphore et le soufre liquides dans la moitié inférieure de la jambe réactionnelle, une évacuation (5) du ou des polysulfure(s) de tétraphosphore sous forme gazeuse située au voisinage de l'une quelconque des extrémités supérieures des parties (1) et (2).

12. Dispositif selon la revendication 11, caractérisé en ce que la partie (2) a un diamètre au moins égal au diamètre de la jambe réactionnelle (1).

13. Dispositif selon la revendication 12, caractérisé en ce que le rapport des diamètres des parties (2) et (1) peut aller de 1 à 5 et est de préférence compris entre 2 et 3.

14. Dispositif selon la revendication 11, caractérisé en ce que le soufre liquide et le phosphore liquide sont introduits dans le milieu réactionnel à un ou plusieurs endroits situés essentiellement dans le tiers inférieur de la jambe réactionnelle.

15. Dispositif selon la revendication 14, caractérisé en ce que le soufre et le phosphore sont introduits d'une façon telle que l'alimentation en soufre s'effectue à un niveau différent du niveau de l'alimentation en phosphore.

16. Dispositif selon la revendication 11, caractérisé en ce que le rapport hauteur sur diamètre de la jambe réactionnelle (1) est au moins égal à 2.

17. Dispositif selon la revendication 16, caractérisé en ce que le rapport hauteur sur diamètre de la jambe réactionnelle (1) est compris entre 2 et 20 et de préférence entre 5 et 10.

18. Dispositif selon la revendication 11, caractérisé en ce que la hauteur de la jambe réactionnelle est au moins égale à 0,5 mètre.

19. Dispositif selon la revendication 18, caractérisé en ce que la hauteur de la jambe réactionnelle est comprise entre 0,5 mètre et 5 mètres et de préférence entre 1,5 mètres et 3 mètres.

20. Dispositif selon la revendication 11, caractérisé en ce que les parties (1), (2), (3) et (4) sont munies de systèmes de chauffage pouvant fonctionner conjointement ou séparément.

21. Dispositif selon la revendication 11, caractérisé en ce que l'évacuation (5) est reliée à un système de fractionnement (8) et de refroidissement (9) .

22. Dispositif selon la revendication 21, caractérisé en ce que les parties (2) et (8) sont superposées.

## Patentansprüche

1. Kontinuierliches Verfahren zur Herstellung von Tetraphosphorpolysulfiden der Formel P₄Sₓ durch die Reaktion von Phosphor und Schwefel, wobei x wenigstens gleich 3 ist und das Verfahren darin besteht, das Reaktionsgemisch fortlaufend mit flüssigem Phosphor und flüssigem Schwefel im Kreislauf zu führen, wobei Schwefel und Phosphor in einem Verhältnis eingebracht werden, das dem gewünschten Polysulfid oder den gewünschten Polysulfiden entspricht, die Temperatur des Reaktionsgemisches zu überwachen, das Polysulfid oder die Polysulfide im gasförmigen Aggregatzustand von dem Reaktionsgemisch zu trennen, dadurch gekennzeichnet, daß die Reaktion in einem Kreislaufreaktor durchgeführt wird und der Kreislauf im wesentlichen durch die im Reaktionsgemisch herrschenden Dichteunterschiede bewirkt wird.

2. Verfahren nach Anspruch 1, dadurch gekennzeichnet, daß die mittlere Temperatur des Reaktionsgemisches wenigstens 300°C beträgt.

3. Verfahren nach einem der Ansprüche 1 oder 2, dadurch gekennzeichnet, daß die mittlere Temperatur des Reaktionsgemisches zwischen 300°C und 600°C liegt.

4. Verfahren nach Anspruch 1, dadurch gekennzeichnet, daß die Kreislaufgeschwindigkeit des Reaktionsgemisches wenigstens 0,01 m/s beträgt.

5. Verfahren nach einem der Ansprüche 1 oder 4, dadurch gekennzeichnet, daß die Kreislaufgeschwindigkeit des Reaktionsgemisches zwischen 0,01 m/s und 1 m/s beträgt.

6. Verfahren nach Anspruch 1, dadurch gekennzeichnet, daß die Reaktion unter einem Gesamtdruck von wenigstens 0,1 bar durchgeführt wird.

7. Verfahren nach einem der Ansprüche 1 oder 6, dadurch gekennzeichnet, daß die Reaktion unter einem Gesamtdruck zwischen 0,1 bar und 10 bar durchgeführt wird.

8. Verfahren nach einem der Ansprüche 1, 6 oder 7, dadurch gekennzeichnet, daß die Reaktion unter einem Gesamtdruck zwischen 1 bar und 2 bar durchgeführt wird.

9. Verfahren nach einem der Ansprüche 1 bis 8, dadurch gekennzeichnet, daß flüssiger Phosphor und flüssiger Schwefel in den unteren Bereich des Behälters mit flüssigem Tetraphosphorpolysulfid eingebracht werden.

10. Verfahren nach einem der Ansprüche 1 bis 9, dadurch gekennzeichnet, daß das Tetraphosphorpolysulfid Tetraphosphordecasulfid, P₄S₁₀, ist.

11. Vorrichtung zur Durchführung des Verfahrens nach einem der Ansprüche 1 bis 10, wobei die Vorrichtung dadurch gekennzeichnet ist, daß sie einen Teilbereich (1) - bezeichnet als Reaktionsbereich - im allgemeinen zylindrisch und senkrecht, einen Teilbereich (2), im allgemeinen senkrecht und parallel zu dem Reaktionsbereich umfaßt, wobei die unteren und oberen Abschnitte der beiden Teilbereiche durch die Rohre (3) und (4), von etwa gleichem Durchschnitt wie der Reaktionsbereich, verbunden sind; die Vorrichtung umfaßt zusätzlich wenigstens einen Einlaß für Flüssigen Phosphor (6) und wenigstens einen Einlaß für flüssigen Schwefel (7), wodurch flüssiger Phosphor und flüssiger Schwefel in den unteren Teil des Reaktionsbereiches eingebracht werden können und einen Auslaß (5) für das gasförmige Tetraphosphorpolysulfid oder die gasförmigen Tetraphosphorpolysulfide, die sich unmittelbar in den oberen Enden der Teilbereiche (1) und (2) befinden.

12. Vorrichtung nach Anspruch 11, dadurch gekennzeichnet, daß der Durchmesser des Teilbereiches (2) größer oder gleich dem Durchmesser des Reaktionsbereiches ist.

13. Vorrichtung nach Anspruch 12, dadurch gekennzeichnet, daß das Verhältnis der Durchmesser der Teilbereiche (2) und (1) zwischen 1 und 5 betragen kann und vorzugsweise zwischen 2 und 3 liegt.

14. Vorrichtung nach Anspruch 11, dadurch gekennzeichnet, daß flüssiger Schwefel und flüssiger Phosphor durch eine oder mehrere sich im wesentlichen im unteren Drittel des Reaktionsbereiches befindenden Öffnungen in das Reaktionsgemisch eingebracht werden.

15. Vorrichtung nach Anspruch 14, dadurch gekennzeichnet, daß Schwefel und Phosphor so eingebracht werden, daß sich der Einlaß für den Schwefel auf einer anderen Höhe als der Einlaß für den Phosphor befindet.

16. Vorrichtung nach Anspruch 11, dadurch gekennzeichnet, daß das Verhältnis von Höhe zu Durchmesser des Reaktionsbereiches wenigstens 2 beträgt.

17. Vorrichtung nach Anspruch 16, dadurch gekennzeichnet, daß das Verhältnis von Höhe zu Durchmesser des Reaktionsbereiches zwischen 2 und 20, vorzugsweise zwischen 5 und 10, beträgt.

18. Vorrichtung nach Anspruch 11, dadurch gekennzeichnet, daß die Höhe des Reaktionsbereiches wenigstens 0,5 Meter beträgt.

19. Vorrichtung nach Anspruch 18, dadurch gekennzeichnet, daß die Höhe des Reaktionsbereiches zwischen 0,5 Meter und 5 Metern, vorzugsweise zwischen 1,5 Metern und 3 Metern, beträgt.

20. Vorrichtung nach Anspruch 11, dadurch gekennzeichnet, daß die Teilbereiche (1), (2), (3) und (4) mit Heizsystemen versehen sind, die gemeinsam oder einzeln betrieben werden können.

21. Vorrichtung nach Anspruch 11, dadurch gekennzeichnet, daß der Auslaß (5) mit einem System zur stufenweisen Destillation (8) und Kühlung (9) versehen ist.

22. Vorrichtung nach Anspruch 21, dadurch gekennzeichnet, daß die Teilbereiche (2) und (8) übereinander angeordnet sind.

## Claims

1. Continuous process for the preparation of tetraphosphorus polysulphides of formula P₄Sₓ, in which x is at least equal to 3 by reaction of phosphorus and sulphur, the said process consisting in continuously feeding the circulating reaction mixture with liquid phosphorus and sulphur in proportions corresponding to the desired polysulphide(s), in controlling the temperature of the reaction mixture, in separating the tetraphosphorus polysulphide(s) in the gaseous state from the said reaction mixture, the said process being characterized in that the reaction is carried out in a loop reactor, the said circulation being produced essentially by the density differences prevailing in the said reaction mixture.

2. Process according to Claim 1, characterized in that the average temperature of the reaction mixture is at least 300°C.

3. Process according to either of Claims 1 and 2, characterized in that the average temperature of the reaction mixture is between 300°C and 600°C.

4. Process according to Claim 1, characterized in that the circulation velocity of the reaction mixture is at least 0.01 m/s.

5. Process according to either of Claims 1 and 4, characterized in that the circulation velocity of the reaction mixture is between 0.01 m/s and 1 m/s.

6. Process according to Claim 1, characterized in that the reaction is carried out at an absolute pressure of at least 0.1 bar.

7. Process according to either of Claims 1 and 6, characterized in that the reaction is carried out at an absolute pressure of between 0.1 bar and 10 bars.

8. Process according to any one of Claims 1, 6 and 7, characterized in that the reaction is carried out at an absolute pressure of between 1 bar and 2 bars.

9. Process according to any one of Claims 1 to 8, characterized in that the liquid phosphorus and sulphur are introduced into a stock of liquid tetraphosphorus polysulphide.

10. Process according to any one of Claims 1 to 9, characterized in that the tetraphosphorus polysulphide is tetraphosphorus decasulphide P₄S₁₀.

11. Device making it possible to implement the process according to any one of Claims 1 to 10, the said device being characterized in that it comprises a part (1) - called reaction leg - which is generally cylindrical and substantially vertical, a part (2) which is generally cylindrical and substantially parallel to the reaction leg, these two parts being generally connected at their lower and upper parts by pipes (3) and (4) of cross-section which is substantially equal to the cross-section of the reaction leg, at least one liquid phosphorus feed (6) and at least one liquid sulphur feed (7) allowing the liquid phosphorus and sulphur to be introduced into the lower half of the reaction leg, a discharge (5) for the tetraphosphorus polysulphide(s) in gaseous form being situated in the vicinity of any of the upper ends of the parts (1) and (2).

12. Device according to Claim 11, characterized in that part (2) has a diameter which is at least equal to the diameter of the reaction leg (1).

13. Device according to Claim 12, characterized in that the ratio of the diameters of parts (2) and (1) can range from 1 to 5 and is preferably between 2 and 3.

14. Device according to Claim 11, characterized in that the liquid sulphur and the liquid phosphorus are introduced into the reaction mixture at one or more points situated essentially in the bottom third of the reaction leg.

15. Device according to Claim 14, characterized in that the sulphur and the phosphorus are introduced in such manner that the sulphur feed takes place at a level which is different from the level of the phosphorus feed.

16. Device according to Claim 11, characterized in that the height-to-diameter ratio of the reaction leg (1) is at least 2.

17. Device according to Claim 16, characterized in that the height-to-diameter ratio of the reaction leg (1) is between 2 and 20 and preferably between 5 and 10.

18. Device according to Claim 11, characterized in that the height of the reaction leg is at least 0.5 metres.

19. Device according to Claim 18, characterized in that the height of the reaction leg is between 0.5 metres and 5 metres and preferably between 1.5 metres and 3 metres.

20. Device according to Claim 11, characterized in that parts (1), (2), (3) and (4) are provided with heating systems which may operate jointly or separately.

21. Device according to Claim 11, characterized in that the discharge (5) is connected to a fractionating (8) and cooling (9) system.

22. Device according to Claim 21, characterized in that parts (2) and (8) are superposed.
